# EUROPÄISCHE PATENTSCHRIFT

(11) **EP 0 542 935 B1**
(45) Veröffentlichungstag und Bekanntmachung des Hinweises auf die Patenterteilung: **24.05.1995**
(21) Anmeldenummer: 92906505.0
(22) Anmeldetag: 13.03.1992
(51) Int. Cl.: C03B 9/38

(54) **VORRICHTUNG ZUM KÜHLEN DER MÜNDUNGSFORMEN EINER GLASFORMMASCHINE**
DEVICE FOR COOLING THE MOUTH MOULDS OF A GLASS MOULDING MACHINE
DISPOSITIF POUR LE REFROIDISSEMENT DES MOULES DE SORTIE D'UNE MACHINE A MOULER LE VERRE

(30) Priorität: 07.06.1991 DE 4118682
(43) Veröffentlichungstag der Anmeldung: 26.05.1993
(73) Patentinhaber: FIRMA HERMANN HEYE, D-31682 Obernkirchen (DE)
(72) Erfinder: BÖGERT, Hermann, D-3262 Auetal 2 (DE); SCHNEIDER, Wilhelm, D-3262 Auetal 2 (DE); UHE, Heinrich, D-4973 Vlotho/Uffeln (DE)
(74) Vertreter: Kosel, Peter, Dipl.-Ing.
(86) Internationale Anmeldenummer: EP9200553
(87) Internationale Veröffentlichungsnummer: WO9221624

(56) Entgegenhaltungen:
- EP-A- 0 443 949
- DE-C- 3 040 310
- DE-C- 3 637 552

## Beschreibung

Die Erfindung betrifft eine Vorrichtung gemäß dem Oberbegriff des Anspruchs 1.

Bei einer bekannten Vorrichtung dieser Art (DE-C1-36 37 552) ist jeder Mündungswerkzeughalter gleichzeitig als Verteilvorrichtung ausgebildet. Kühlluft wird entweder nur über Kühlkanäle in den Mündungswerkzeughälften in einen Kupplungsrezeß des Mündungswerkzeugs oder zusätzlich durch Kühlkanäle auf einen Halsbereich des Külbels geblasen. Die Zuführvorrichtungen für die Kühlluft sind bis zu der Schwenkwelle des Invertmechanismus der I.S.-Glasformmaschine ausgebildet. Diese Vorrichtung gestattet zwar eine Kühlung der Mündungsformen während des gesamten Betriebszyklus, ist aber verhältnismäßig aufwendig.

Aus der DE-C1-30 40 310 ist es an sich bekannt, die Verteilvorrichtungen an einem Formsegmenthalter für die Vorformhälften zu montieren. Ein Einlaß jeder Verteilvorrichtung ist über eine Gelenkkanalteile aufweisende Zuführvorrichtung ständig mit der Kühlluftbox verbunden. Das Mündungswerkzeug wird durch Düsen der Verteilvorrichtung nur dann wirksam von außen frei angeblasen und gekühlt, wenn die Vorformhälften geschlossen sind.

Aus der DE-A1-33 36 488 ist eine kombinierte Kühlung der Vorformhälften und der Mündungswerkzeughälften an sich bekannt. Die aus den Kühlkanälen der Vorformhälften austretende, erwärmte Kühlluft strömt in eine untere Ringnut der Vorformhälften, von dort nur bei geschlossenen Vorformhälften in Schlitze zwischen senkrechten Außenrippen der Mündungswerkzeughälften und aus den Schlitzen in die Atmosphäre. Diese Mündungsformkühlung ist wenig wirksam und praktisch nicht steuerbar.

Gemäß der US-A-4 983 203 soll die Mündungsform sekundär durch Wärmeleitung in die Vorformhälften kühlbar sein. Dies kann jedoch allenfalls funktionieren, solange sich die Vorformhälften in ihrer geschlossenen Stellung und damit in Berührung mit der Mündungsform befinden. Im übrigen besteht zwischen der Mündungsform und den Vorformhälften eine nur geringe Temperaturdifferenz, so daß mit einer nennenswerten sekundären Kühlung der Mündungsform durch Wärmeleitung wohl nicht zu rechnen ist. Die Vorformhälften werden dagegen nur in ihrer geöffneten Stellung gekühlt, also zeitlich versetzt zu der sekundären Kühlung der Mündungsform. Jede Vorformhälfte weist durchgehende, achsparallele Kühlluftkanäle auf, die in der geöffneten Stellung der Vorformhälften mit einem gekrümmten Schlitz in einer stationären Kühlluftkammer fluchten. Jeder Schlitz wird entweder durch einen Zweigkanal und zwei Einlaßöffnungen der Kühlluftkammer oder durch zwei Zweigkanäle und je eine zugehörige Einlaßöffnung der Kühlluftkammer mit Kühlluft versorgt. Über Drossel- oder Absperrventile in den Einlaßöffnungen kann die Versorgung der Schlitze oder Schlitzhälften mit Kühlluft variiert werden. Alle Einlaßöffnungen erhalten ihre Kühlluft durch eine gemeinsame stationäre Luftversorgungskammer.

Der Erfindung liegt die Aufgabe zugrunde, die Kühlung der Mündungsformen zu verbessern.

Diese Aufgabe ist durch die Merkmale des Anspruchs 1 gelöst. Üblicherweise weist die Mündungsform außer den Mündungswerkzeughälften einen ungeteilten Führungsring für den Preßstempel beim Preß-Blasen oder für den Pegel beim Blas-Blasen auf. Der Führungsring ist meist mit einem Außenflansch in einer entsprechenden Ausnehmung der Mündungswerkzeughälften gehalten, und zwar auch dann, wenn die Mündungswerkzeughälften sich in der geöffneten Stellung befinden. So wird bei Kühlung der Mündungswerkzeughälften der Führungsring sekundär ebenfalls gekühlt. Als Kühlfluid kommt insbesondere kostengünstige Gebläseluft mit verhältnismäßig geringem Druck in Betracht. Vorteilhaft ist, daß auf die erfindungsgemäße Weise die Kühlung der Mündungsform völlig unabhängig von der Kühlung der Vorformhälften geschehen kann. Es kann auch für jeweils eine Mündungswerkzeughälfte und die zugehörigen Vorformhälften eine gemeinsame Zuführvorrichtung für das Kühlfluid vorgesehen sein. Für die Kühlung der Mündungsformen steht der gesamte Teil der Zyklusdauer zur Verfügung, in dem sich die Mündungsformen in der Vorformstation befinden. Wenn für die Kühlung der Mündungsformen gesonderte Zuführvorrichtungen Verwendung finden, können die Kennwerte des für die Kühlung der Mündungsformen verwendeten Kühlfluids in optimaler Weise eingestellt werden. Zu diesen Kennwerten gehören insbesondere Temperatur und Druck des Kühlfluids. Durch das Zusammenwirken von Zuführvorrichtung und Verteilvorrichtung ist auch bei Mehrfachformbetrieb, also z. B. Doppel- oder Dreifachformbetrieb, mit geringem baulichen Aufwand eine gleichmäßige und wirkungsvolle Kühlung der Mündungsformen gesichert. Dazu können insbesondere die Verteilvorrichtungen in optimaler Weise gestaltet werden. Eine Nachrüstung bestehender Glasformmaschinen mit der erfindungsgemäßen Kühlvorrichtung für die Mündungsformen ist kostengünstig möglich.

Durch die Merkmale des Anspruchs 2 ist das Zusammenwirken der mitbewegbaren Teile der Verteilvorrichtung mit dem Rest der Vorrichtung erleichtert.

Gemäß Anspruch 3 lassen sich die Teile der Verteilvorrichtung verhältnismäßig leicht zueinander ausrichten.

Die Spaltdichtung gemäß Anspruch 4 ist kostengünstig und verschleißfrei. Die Verluste an Kühlfluid durch die Spaltdichtung halten sich vor allem dann in Grenzen, wenn als Kühlfluid Gebläseluft von verhältnismäßig geringem Druck verwendet wird.

Durch die Ausbildung gemäß Anspruch 5 lassen sich auch verhältnismäßig enge räumliche Verhältnisse ohne Störung des Transports der Mündungsformen aus der Vorform in die Fertigform beherrschen.

Bei dem Ventil gemäß Anspruch 6 kann es sich um ein Drossel- und/oder Absperrventil handeln.

Gemäß Anspruch 7 werden die Mündungswerkzeughälften mit dem Kühlfluid frei angeblasen. Die gewünschte Kühlwirkung läßt sich z.B. durch die Wahl der Größe des Abstandes beliebig genau einstellen.

Die Merkmale des Anspruchs 8 erleichtern die Erreichung einer präzisen Kühlwirkung und führen zu verhältnismäßig geringem Kühlfluidbedarf.

Gemäß Anspruch 9 ist euch eine Innenkühlung der Mündungswerkzeughälften mit besonders geringem Kühlfluidbedarf und verminderter Geräuschentwicklung möglich.

Durch die Merkmale des Anspruchs 10 läßt sich ein besonders verlustarmer Übergang des Kühlfluids erreichen.

Weitere Merkmale und Vorteile der Erfindung ergeben sich aus der nachfolgenden Beschreibung von Ausführungsbeispielen anhand der Zeichnungen. Es zeigt:
Fig. 1 einen schematischen Längsschnitt durch einen Teil einer ersten Ausführungsform der Vorrichtung,
Fig. 2 im wesentlichen die Draufsicht auf die Ausführungsform gemäß Fig. 1,
Fig. 3 ein Detail aus Fig. 2 in vergrößerter Darstellung,
Fig. 4 ebenfalls ein Detail aus Fig. 2 in vergrößerter Darstellung,
Fig. 5 die Schnittansicht nach Linie V-V in Fig. 4,
Fig. 6 die Schnittansicht nach Linie VI-VI in Fig. 4,
Fig. 7 ein Detail aus Fig. 1 in anderer Ausführungsform und
Fig. 8 ein Detail aus Fig. 1 in wiederum anderer Ausführungsform.

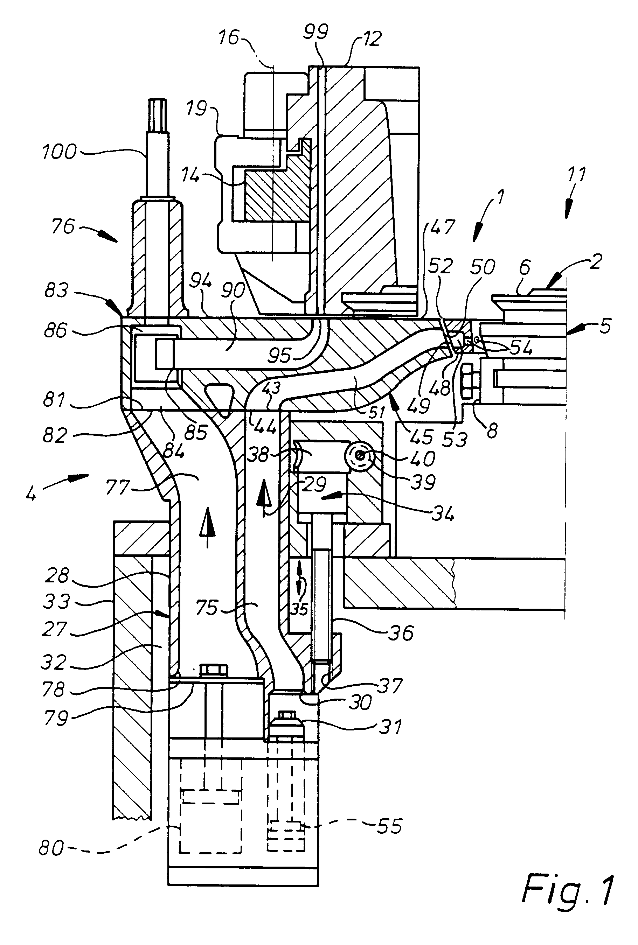

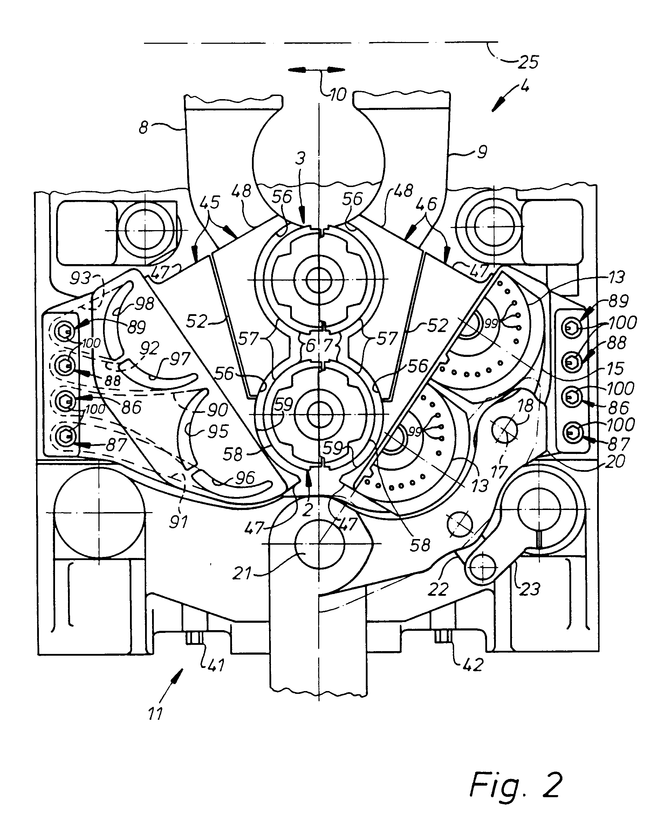

In Fig. 1 ist ein Teil einer Vorrichtung 1 zum Kühlen von Mündungsformen 2 und 3 (s. auch Fig. 2) einer I.S.-Glasformmaschine dargestellt. Die Maschine arbeitet im sogenannten Doppelformbetrieb, bei dem in jeder Sektion 4 der Maschine gleichzeitig zwei Hohlglasgegenstände geformt werden.

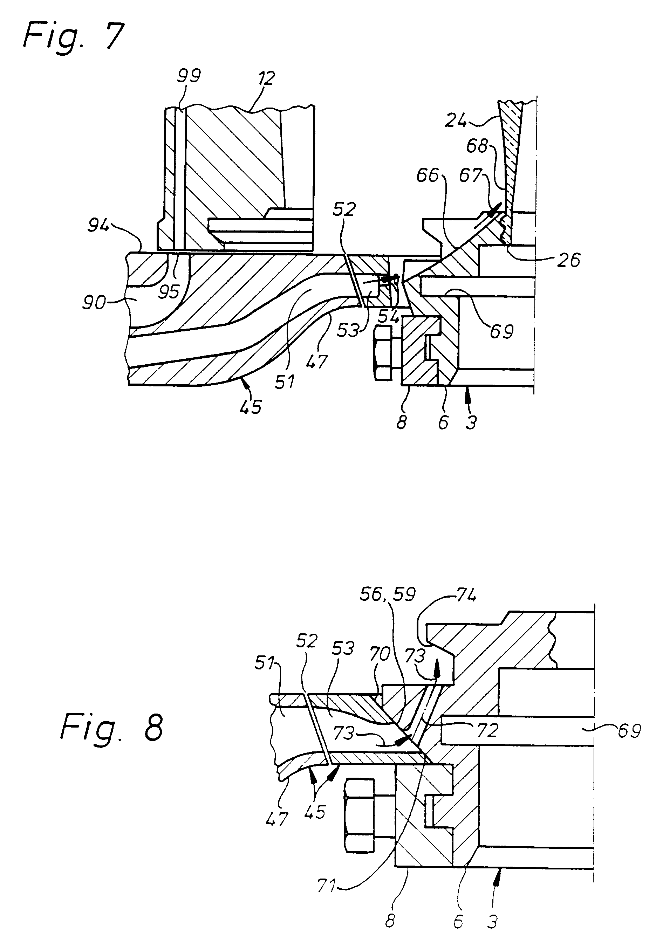

Jede Mündungsform 2,3 weist ein längsgeteiltes Mündungswerkzeug 5 mit Mündungswerkzeughälften 6 und 7 auf, die durch Mündungswerkzeughalter 8 und 9 zwischen einer in den Fig. 1 und 2 gezeigten geschlossenen und einer geöffneten Stellung bewegbar sind. Diese Bewegung geschieht gemäß einem Doppelpfeil 10 in Fig. 2. In der üblichen Weise weist jede Mündungsform 2,3 außer den Mündungswerkzeughälften 6,7 einen in den Zeichnungen nicht dargestellten, ungeteilten Führungsring für einen ebenfalls nicht gezeigten, in einer Vorformstation 11 wirksamen Preßstempel beim Preß-Blasen oder Pegel beim Blas-Blasen auf. Der Führungsring ist mit einem Außenflansch in einer entsprechenden inneren Umfangsnut 69 (Fig. 7 und 8) der Mündungswerkzeughälften 6,7 gehalten, und zwar auch dann, wenn die Mündungswerkzeughälften 6,7 sich in der geöffneten Stellung befinden.

In jedem Betriebszyklus wirkt jede Mündungsform 2,3 zunächst in der Vorformstation 11 mit zwischen einer geschlossenen und einer geöffneten Stellung bewegbaren Vorformhälften 12 und 13 zusammen. Jede Vorformhälfte 12,13 hängt in an sich bekannter Weise auf einer Wippe 14 und 15, die jeweils um eine Längsachse 16 und 17 eines Wippenbolzens 18 (Fig. 2) in Grenzen schwenkbar ist. Jeder Wippenbolzen 18 ist Bestandteil eines Vorformhalters 19 und 20 (Fig. 2), die beide um eine gemeinsame Scharniersäule 21 (Fig. 2) jeweils über eine Lasche 22 durch eine Kurbel 23 (Fig. 2) schwenkbar sind.

Nach dem Öffnen der Vorformhälften 12, 13 wird durch jede der weiterhin geschlossenen Mündungsformen 2,3 ein in der Vorformstation 11 durch Pressen oder Vorblasen hergestelltes Külbel 24 (Fig. 7) gehalten. Die Külbel 24 werden dann durch Drehung der Mündungswerkzeughalter 8,9 um eine waagerechte Invertachse 25 (Fig. 2) in eine nicht gezeigte Fertigformstation transportiert, wo jeweils in einer Fertigform aus dem Külbel durch Blasen ein fertiger Hohlglasgegenstand hergestellt wird. Danach werden gemäß dem Doppelpfeil 10 (Fig. 2) in der Fertigformstation die Mündungswerkzeuge 5 geöffnet, bis Mündungen 26 (Fig. 7) der Hohlglasgegenstände freigegeben sind. Sodann werden die Mündungswerkzeughalter 8,9 um die Invertachse 25 in ihre Ausgangsstellung in der Vorformstation 11 zurückgedreht, wo ein neuer Betriebszyklus beginnen kann. Rechtzeitig vor Beendigung dieser Zurückdrehung werden die Mündungswerkzeuge 5 wieder geschlossen.

Im Rahmen der Vorrichtung 1 zum Kühlen der Mündungsformen 2,3 sind zunächst stationäre Zuführvorrichtungen 27 für ein Kühlfluid, insbesondere Kühlluft, vorgesehen. Jedem der Mündungswerkzeughalter 8,9 ist dabei eine solche stationäre Zuführvorrichtung 27 zugeordnet. Jede Zuführvorrichtung 27 weist einen zylindrischen Hohlkörper 28 mit einem Zuführkanal 75 auf, durch den Kühlfluid in Richtung eines Pfeils 29 strömt, wenn sein Einlaß 30 durch Betätigung eines Ventils 31 geöffnet ist. Der Einlaß 30 erstreckt sich in einen mit Kühlfluid unter Überdruck, vorzugsweise Gebläsedruck angefüllten Raum 32 einer Box 33 der Sektion 4.

An der Box 33 ist für jede Zuführvorrichtung 27 ein Antrieb 34 vorgesehen, durch den die Zuführvorrichtung 27 in Richtung eines Doppelpfeils 35 gehoben oder gesenkt werden kann. Dazu greift eine Schraubspindel 36 des Antriebs 34 in eine Gewindebohrung 37 am unteren Ende der Zuführvorrichtung 27. Die Schraubspindel 36 ist an einem Schneckenrad 38 befestigt, das mit einer Schnecke 39 kämmt. Die Schnecke 39 ist auf einer Welle 40 befestigt, die über ein als Mutter 41 und 42 ausgebildetes Ende (Fig. 2) von Hand drehbar ist. Durch diese Antriebe 34 lassen sich die beiden Zuführvorrichtungen 27 beliebig feinfühlig in der Höhe einstellen.

Das Kühlfluid tritt aus einem Auslaß 43 jedes Zuführkanals 75 aus und gelangt in einen damit fluchtenden Einlaß 44 einer dem jeweiligen Mündungswerkzeughalter 8,9 zugeordneten Verteilvorrichtung 45 und 46.

Jede Verteilvorrichtung 45, 46 ist in einen in der Vorformstation 11 angeordneten stationären Teil 47 und einen mit dem zugehörigen Mündungswerkzeughalter 8,9 mitbewegbaren Teil 48 unterteilt. In einer Ausgangsstellung jeder Mündungsform 2,3 (Fig. 1 und 2) liegt ein Einlaß 49 jedes mitbewegbaren Teils 48 der Verteilvorrichtung 45,46 einem Auslaß 50 des zugehörigen stationären Teils 47 der Verteilvorrichtung 45,46 gegenüber.

Von dem Einlaß 44 strömt das Kühlfluid in einer sich erheblich verbreiternden Luftkammer 51 jedes stationären Teils 47 bis zu dessen Auslaß 50. Von dort überquert das Kühlfluid einen gegenüber der Senkrechten geneigten Dichtungsspalt 52 und tritt durch den Einlaß 49 in eine Luftkammer 53 des mitbewegbaren Teils 48 ein. Aus der Luftkammer 53 gelangt das Kühlfluid durch eine Anzahl über den Umfang der zugehörigen Mündungsform 2,3 verteilte Düsenoffnungen 54 in freiem Strahl auf die Außenfläche des Mündungswerkzeugs 5. Gemäß Fig. 1 wird ein Teil des Kühlfluids aus den Düsenöffnungen 54 nach oben und ein anderer Teil nach unten abströmen, so daß eine großflächige Kühlung des Mündungswerkzeugs 5 stattfindet.

Diese Kühlung kann unabhängig von der Betriebsstellung der Vorformhälften 12, 13 (Fig. 2) während der gesamten oder nur während eines Teils derjenigen Dauer erfolgen, in der sich die Mündungsformen 2,3 in ihrer Ausgangsstellung gemäß den Fig. 1 und 2 befinden. Die Länge der tatsächlichen Kühldauer wird durch die Betätigung des Ventils 31 durch einen Ventilantrieb 55 bestimmt. Dabei kann das Ventil 31 entweder ganz geöffnet bzw. ganz geschlossen werden oder aber in Zwischenstellungen für eine Drosselung des Kühlmediumstromes sorgen. Durch eine solche Drosselung läßt sich das Ausmaß der Kühlwirkung an den Mündungsformen 2,3 einstellen.

Wegen des verhältnismäßig geringen Drucks des Kühlfluids (Gebläseluft) ist der Kühlfluidverlust durch den Dichtungsspalt 52 hindurch verhältnismäßig gering. Außerdem kann die Breite des Dichtungsspalts 52 durch Höheneinstellung der Zuführvorrichtung 27 und der daran befestigten Verteilvorrichtung 45 eingestellt werden.

Aus Fig. 1 ist auch zu erkennen, daß sich der mitbewegbare Teil 48 der Verteilvorrichtung 45 von seinem Mündungswerkzeughalter 8 aus radial nach außen erstreckt. Die Art der Befestigung des mitbewegbaren Teils 48 an dem Mündungswerkzeughalter 8 wird später gezeigt.

Die aus Fig. 1 erkennbare, gegenüber der Senkrechten geneigte Anordnung des Dichtungsspalts 52 erleichtert das Rückkehren der Mündungsformen 2,3 mit den mitbewegbaren Teilen 48 in ihre Ausgangsstellung gemäß den Fig. 1 und 2.

Fig. 1 zeigt auch einen Teil einer Vorrichtung 76 zum Kühlen der Vorformhälften 12, 13 (Fig. 2). Dazu weist jede Zuführvorrichtung 27 einen weiteren Zuführkanal 77 für Kühlfluid, insbesondere Kühlluft, auf. Ein Einlaß 78 des weiteren Zuführkanals 77 kann durch ein weiteres Ventil 79 geöffnet oder geschlossen oder gedrosselt werden und bezieht Kühlfluid aus dem Raum 32. Das weitere Ventil 79 ist durch einen Ventilantrieb 80 ferngesteuert betätigbar.

Ein Auslaß 81 des weiteren Zuführkanals 77 steht ständig mit einem Einlaß 82 einer weiteren Luftkammer 84 einer weiteren Verteilvorrichtung 83 in Verbindung. Jede weitere Luftkammer 84 ist mit vier Auslässen 85 versehen, in denen jeweils ein Drosselventil 86 bis 89 (Fig. 2) angeordnet ist. An jedes Drosselventil 86 bis 89 schließt sich eine Zweigkammer 90 bis 93 (Fig. 2) der weiteren Verteilvorrichtung 83 an. Jede Zweigkammer 90 bis 93 mündet in einer oberen Fläche 94 in einem sich fast über einen Viertelkreis erstreckenden, bogenförmigen Auslaßschlitz 95 bis 98.

Wenn sich die Vorformhälften 12, 13 in ihrer geöffneten Stellung befinden, fluchtet mit jedem Auslaßschlitz 95 bis 98 eine Anzahl auf einem Kreis angeordneter, achsparalleler Kühlkanäle 99 in der Wand der zugehörigen Vorformhälfte 12, 13. Bei geöffneten Vorformhälften 12, 13 können die Kühlkanäle also von unten nach oben von Kühlfluid durchströmt und dadurch gekühlt werden.

Das Ausmaß dieser Kühlung kann durch Einstellung der Drosselventile 86 bis 89 jeweils über einen von Hand betätigbaren Ventilschaft 100 bestimmt werden.

In Fig. 1 sind die Vorrichtungen 1 und 76 auf jeder Seite der Sektion 4 zu einer baulichen Einheit zusammengefaßt. Alternativ könnten jeder Zuführkanal 75 und die zugehörige Verteilvorrichtung 45 oder 46 einerseits und jeder weitere Zuführkanal 77 und die Zugehörige weitere Verteilvorrichtung 83 andererseits baulich voneinander getrennt sein. Im letzteren Fall wäre z.B. der zylindrische Hohlkörper 28 in zwei wiederum zylindrische Teile der Länge nach unterteilt, wobei jeder dieser Teile mit der zugehörigen Verteilvorrichtung 45;46;83 durch einen gesonderten Antrieb, z. B. 34, in der Höhe individuell einstellbar sein könnte.

Aus Fig. 2 ist erkennbar, daß ein durch die Düsenöffnungen 54 definierter Endauslaß 56 der mitbewegbaren Teile 48 nur einem ersten Umfangsbereich 57 der Mündungswerkzeughälften 6,6 und 7,7 gegenüberliegt. Einem weiteren Umfangsbereich 58 jeder in Fig. 2 unteren Mündungswerkzeughälfte 6,7 liegt ein Endauslaß 59 des stationären Teils 47 der Verteilvorrichtungen 45,46 gegenüber.

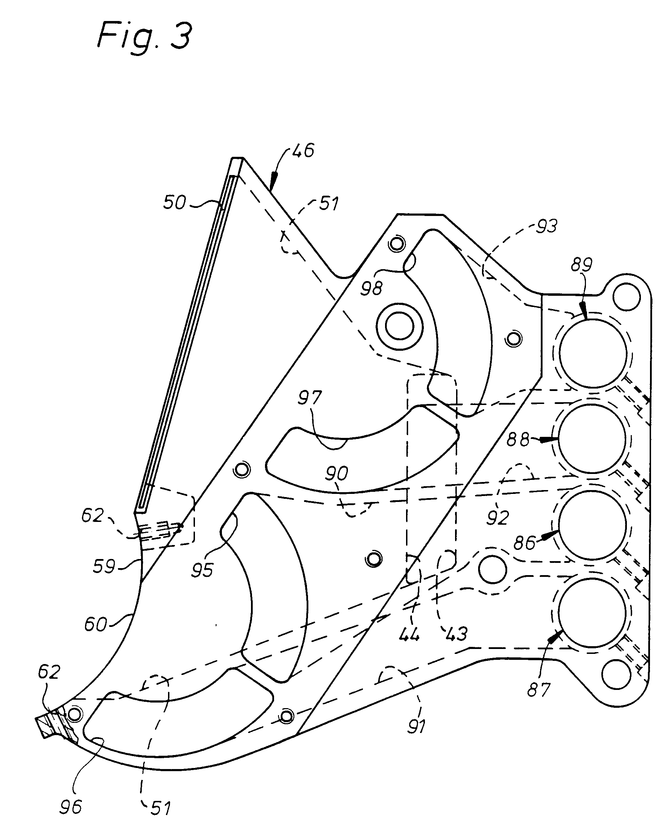

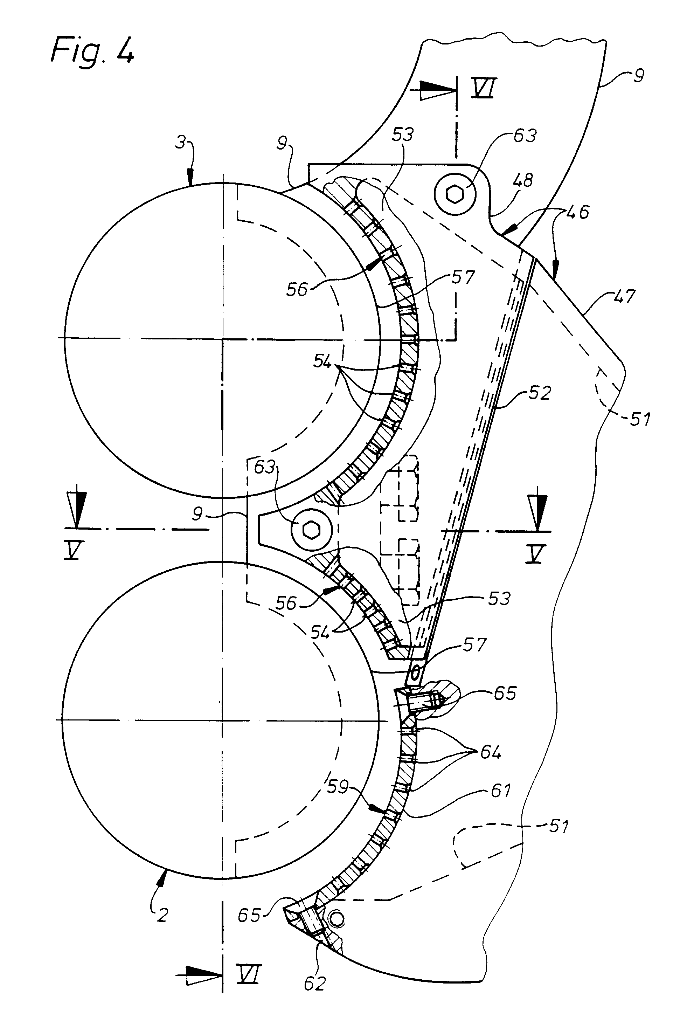

Fig. 3 verdeutlicht, daß der Auslaß 50 als langgestreckter Schlitz ausgebildet ist. Im Bereich des Endauslasses 59 weist jede Verteilvorrichtung 45,46 eine bogenförmige Anlagefläche 60 für ein komplementär gebogenes Düsenblech 61 (Fig. 4) und Gewindebohrungen 62 zu dessen Befestigung auf.

Aus Fig. 3 ist auch besonders deutlich zu erkennen, wie sich die Luftkammer 51, ausgehend von dem Einlaß 44, bis zu dem Auslaß 50 und zu dem Endauslaß 59 hin verbreitert.

Aus Fig. 4 ist erkennbar, daß der mitbewegbare Teil 48 der Verteilvorrichtung 46 mit Schrauben 63 an dem Mündungswerkzeughalter 9 befestigt ist. In der gleichen, hier nicht gezeigten Weise ist der mitbewegbare Teil 48 der Verteilvorrichtung 45 an den Mündungswerkzeughalter 8 angeschraubt. Durch Anordnung und Durchmesserwahl der Düsenöffnungen 54 läßt sich jede beliebige, gewünschte Kühlwirkung auf den ersten Umfangsbereich 57 der Mündungs formen 2,3 ausüben.

Das Düsenblech 61 ist gemäß Fig. 4 ebenfalls mit einer Anzahl Düsenöffnungen 64 versehen. Es ist mit Schrauben 65 festgelegt, die in die Gewindebohrungen 62 (Fig. 3) eingedreht sind. Das Düsenblech 61 weist an seinem in Fig. 4 unteren Ende einen größeren radialen Abstand von der Mündungsform 2 auf als an seinem oberen Ende. Dadurch wird Raum für die Bewegung der Mündungsform 2 und ihres Külbels 24 (Fig. 7) beim Invertieren um die Invertachse 25 (Fig. 2) geschaffen.

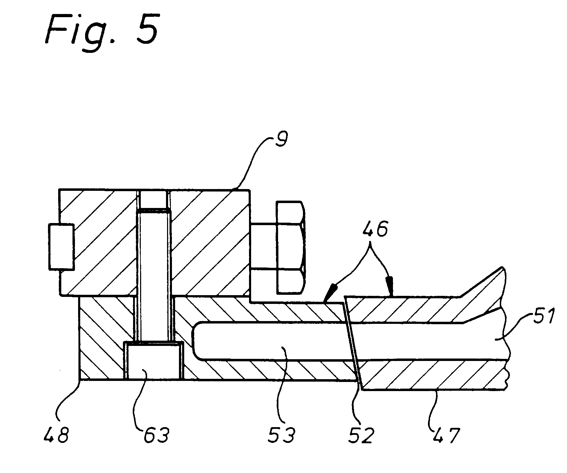

Fig. 5 verdeutlicht die Befestigung des mitbewegbaren Teils 48 durch die Schraube 63 an dem Mündungswerkzeughalter 9.

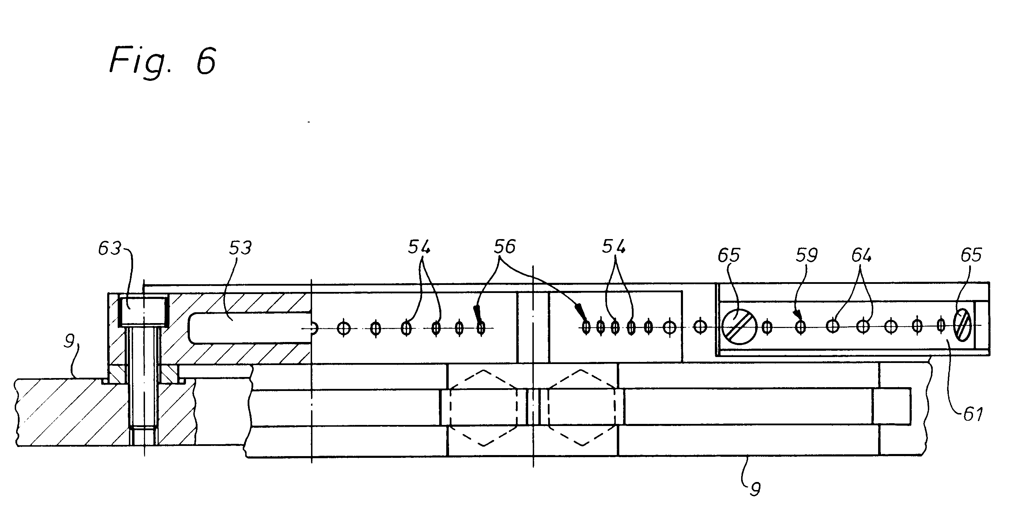

Fig. 6 zeigt weitere Details der Vorrichtung nach Fig. 4.

Fig. 7 stellt eine Abwandlung insofern dar, als hier die aus den Düsenöffnungen 54 austretende Kühlluft nicht nur auf die Außenseite der Mündungswerkzeughälfte 6 geblasen wird, sondern zum Teil auch in radialen Schlitzen 66 an der Außenseite der Mündungswerkzeughälfte 6 in Richtung eines Pfeils 67 entlangströmt und auf einen Halsbereich 68 des Külbels 24 auftrifft. Das Ausmaß dieser der Stabilisierung des Külbels 24 dienenden Kühlung des Halsbereichs 68 kann durch Art und Anordnung der Schlitze 66 sowie deren relative Lage zu den Düsenöffnungen 54 variiert werden. Auch kann Art, Umfangsverteilung und Richtung der Düsenöffnungen 54 einen Einfluß auf die Kühlung des Halsbereichs 68 haben.

Auch in Fig. 7 ist zur Verdeutlichung der ungeteilte Führungsring der Mündungsform 3 nicht eingezeichnet. Dieser Führungsring hängt mit einem Außenflansch in der inneren Umfangsnut 69 der Mündungswerkzeughälfte 6.

Bei dem Ausführungsbeispiel nach Fig. 8 wird der Endauslaß 56,59 der Verteilvorrichtung 45 vorzugsweise nach Art eines Umfangsschlitzes in einer Endfläche 70 ausgebildet. An der Endfläche 70 liegt unmittelbar eine Gegenfläche 71 der Mündungswerkzeughälfte 6, 7 an. Von der Gegenfläche 71 aus erstrecken sich über den Umfang verteilt eine Anzahl Kühlbohrungen 72, durch die hindurch das Kühlfluid in Richtung von Pfeilen 73 in einen Rezeß 74 der Mündungswerkzeughälfte 6,7 strömt. So findet eine gemischte Kühlung einerseits über die Wandungen der Kühlbohrungen 72 und andererseits durch freie Anblasung von Begrenzungsflächen des Rezesses 74 statt.

## Patentansprüche

1. Vorrichtung (1) zum Kühlen wenigstens einer eine Mündung (26) eines Glasbehälters formenden Mündungsform (2;3) einer Glasformmaschine,
wobei jede Mündungsform (2;3) durch Mündungswerkzeughalter (8,9) zwischen einer geschlossenen und einer geöffneten Stellung bewegbare Mündungswerkzeughälften (6,7) eines längsgeteilten Mündungswerkzeugs (5) aufweist,
wobei in jedem Betriebszyklus jede Mündungsform (2;3) zunächst in einer Vorformstation (11) mit zwischen einer geschlossenen und einer geöffneten Stellung bewegbaren Vorformteilen (12,13) zur Formung eines Külbels (24) zusammenwirkt, nach dem Öffnen der Vorformteile (12,13) das Külbel (24) in eine Fertigformstation transportiert und schließlich nach Öffnung des Mündungswerkzeugs (5) und Freigabe der Mündung (26) sowie nach erneutem Schließen des Mündungswerkzeugs (5) in seine Ausgangsstellung in der Vorformstation (11) zurückgeführt wird,
wobei eine Zuführvorrichtung (27) für ein Kühlfluid, insbesondere Kühlluft, vorgesehen ist,
wobei ein Auslaß (43) der Zuführvorrichtung (27) mit einem Einlaß (44) einer Verteilvorrichtung (45,46) für jeden Mündungswerkzeughalter (8,9) zusammenwirkt,
und wobei durch wenigstens einen Endauslaß (56,59) jeder Verteilvorrichtung (45,46) Kühlfluid in Berührung mit der zugehörigen Mündungswerkzeughälfte (6,7) und gegebenenfalls mit einem Halsbereich (68) des durch die Mündungsform (2;3) gehaltenen Külbels (24) bringbar ist,
dadurch gekennzeichnet, daß jedem Mündungswerkzeughalter (8,9) eine stationäre Zuführvorrichtung (27) zugeordnet ist,
daß jede Verteilvorrichtung (45,46) in einen in der Vorformstation (11) angeordneten stationären Teil (47) und einen mit dem zugehörigen Mündungswerkzeughalter (8,9) mitbewegbaren Teil (48) unterteilt ist,
und daß in der Ausgangsstellung jeder Mündungsform (2;3) ein Einlaß (49) jedes mitbewegbaren Teils (48) der Verteilvorrichtung (45,46) einem Auslaß (50) des zugehörigen stationären Teils (47) der Verteilvorrichtung (45,46) gegenüberliegt.

2. Vorrichtung nach Anspruch 1, dadurch gekennzeichnet, daß sich jeder mitbewegbare Teil (48) der Verteilvorrichtung (45,46) von seinem Mündungswerkzeughalter (8,9) radial nach außen erstreckt.

3. Vorrichtung nach Anspruch 1 oder 2, dadurch gekennzeichnet, daß in der Ausgangsstellung jeder Mündungsform (2;3) eine Teilungsfläche (vgl. 52) zwischen jedem mitbewegbaren Teil (48) der Verteilvorrichtung (45,46) und dem zugehörigen stationären Teil (47) der Verteilvorrichtung (45,46) gegenüber der Senkrechten geneigt ist.

4. Vorrichtung nach einem der Ansprüche 1 bis 3, dadurch gekennzeichnet, daß in der Ausgangsstellung jeder Mündungsform (2;3) zwischen jedem stationären Teil (47) der Verteilvorrichtung (45,46) und dem zugehörigen mitbewegbaren Teil (48) der Verteilvorrichtung (45,46) eine Spaltdichtung (52) besteht.

5. Vorrichtung nach einem der Ansprüche 1 bis 4, dadurch gekennzeichnet, daß einem ersten Umfangsbereich (57) der Mündungswerkzeughälften (6,7) wenigstens ein Endauslaß (56) des mitbewegbaren Teils (48) der Verteilvorrichtung (45,46) gegenüberliegt, und daß einem weiteren Umfangsbereich (58) der Mündungswerkzeughälften (6,7) wenigstens ein Endauslaß (59) des stationären Teils (47) der Verteilvorrichtung (45,46) gegenüberliegt.

6. Vorrichtung nach einem der Ansprüche 1 bis 5, dadurch gekennzeichnet, daß in jeder Zuführvorrichtung (27) ein Ventil (31) angeordnet ist.

7. Vorrichtung nach einem der Ansprüche 1 bis 6, dadurch gekennzeichnet, daß sich der wenigstens eine Endauslaß (56,59) jeder Verteilvorrichtung (45,46) im Abstand gegenüber der zugehörigen Mündungswerkzeughälfte (6,7) befindet.

8. Vorrichtung nach Anspruch 7, dadurch gekennzeichnet, daß der wenigstens eine Endauslaß (56,59) jeder Verteilvorrichtung (45,46) auf die Mündungswerkzeughälften (6,7) gerichtete Düsenöffnungen (54,64) aufweist.

9. Vorrichtung nach einem der Ansprüche 1 bis 6, dadurch gekennzeichnet, daß an den wenigstens einen Endauslaß (56,59) jeder Verteilvorrichtung (45,46) Einlaßöffnungen von Kühlkanälen (72) in den Mündungswerkzeughälften (6,7) anschließen.

10. Vorrichtung nach einem der Ansprüche 1 bis 9, dadurch gekennzeichnet, daß jeder stationäre Teil (47) der Verteilvorrichtung (45,46) in Richtung der Längsachse der wenigstens einen Mündungsform (2;3) einstellbar ist.

## Claims

1. Apparatus (1) for cooling at least one neck ring (2;3) forming a mouth (26) of a glass container in a glass forming machine,
wherein each neck ring (2;3) comprises neck tool halves (6,7) of a longitudinally divided neck tool (5) which are movable by neck tool holders (8,9) between a closed position and an open position,
wherein in each operating cycle each neck ring (2;3) co-operates first of all in a parison mould station (11) with parison mould parts (12,13) movable between a closed position and an open position for the formation of a parison (24), after the opening of the parison mould parts (12,13) the parison (24) is transported by the neck ring to a finishing mould station, and finally after opening of the neck tool (5) and release of the mouth (26) as well as after renewed closure of the neck tool (5) each neck ring is returned to its initial position in the parison mould station (11),
wherein a supply device (27) for a cooling fluid, especially cooling air, is provided,
wherein an outlet (43) of the supply device (27) co-operates with an inlet (44) of a distribution device (45,46) for each neck tool holder (8,9),
and wherein cooling fluid can be directed through at least one final outlet (56,59) of each distribution device (45,46) into contact with the associated neck tool half (6,7) and possibly into contact with a neck region (68) of the parison (24) held by the neck ring (2;3),
characterised in that a stationary supply device (27) is associated with each neck tool holder (8,9),
each distribution device (45,46) is divided into a stationary part (47) arranged in the parison mould station (11) and a part (48) movable with the associated neck tool holder (8,9),
and in the initial position of each neck ring (2;3) an inlet (49) of each movable part (48) of each distribution device (45,46) lies opposite an outlet (50) of the associated stationary part (47) of each distribution device (45,46).

2. Apparatus according to claim 1, in which each movable part (48) of each distribution device (45,46) extends radially outwards from its neck tool holder (8,9).

3. Apparatus according to claim 1 or 2, in which in the initial position of each neck ring (2;3) a dividing surface (52) between each movable part (48) of each distribution device (45,46) and the associated stationary part (47) of each distribution device (45,46) is inclined to the vertical.

4. Apparatus according to one of claims 1 to 3, in which in the initial position of each neck ring (2;3) there is a jointing gap (52) between each stationary part (57) of each distribution device (45,46) and the associated movable part (48) of each distribution device (45,46).

5. Apparatus according to one of claims 1 to 4, in which a first circumferential region (57) of the neck tool halves (6,7) lies opposite at least one final outlet (56) of the movable part (48) of each distribution device (45,46), and a further circumferential region (58) of the neck tool halves (6,7) lies opposite at least one final outlet (59) of the stationary part (47) of each distribution device (45,46).

6. Apparatus according to one of claims 1 to 5, in which a valve (31) is provided in each supply device (27).

7. Apparatus according to one of claims 1 to 6, in which the at least one final outlet (56,59) of each distribution device (45,46) is spaced from the associated neck tool half (6,7).

8. Apparatus according to claim 7, in which the at least one final outlet (56,59) of each distribution device (45,46) has nozzle apertures (54,64) directed towards the neck tool halves (6,7).

9. Apparatus according to one of claims 1 to 6, in which inlet apertures of cooling passages (72) in the neck tool halves (6,7) follow on from said at least one final outlet (56,59) of each distribution device (45,46).

10. Apparatus according to one of claims 1 to 9, in which the stationary part (47) of each distribution device (45,46) is adjustable in the direction of the longitudinal axis or axes of said at least one neck ring (2;3).

## Revendications

1. Dispositif (1) pour le refroidissement d'au moins un moule de sortie (2 ; 3) formant une embouchure (26) d'un récipient en verre dans une machine à mouler le verre,
dans lequel chaque moule de sortie (2 ; 3) présente des demi-outils de sortie (6, 7) d'un outil de sortie (5) divisé longitudinalement, qui peuvent être déplacés par des fixations d'outil de sortie (8, 9) entre une position fermée et une position ouverte,
dans lequel, dans chaque cycle de fonctionnement, chaque moule de sortie (2 ; 3) coopère d'abord, dans un poste de prémoulage (11), avec des préformes (12, 13) mobiles entre une position fermée et une positon ouverte pour la formation d'une paraison (24), la paraison (24) est transportée après l'ouverture des préformes (12, 13) dans un poste de moulage de finition et, après l'ouverture de l'outil de sortie (5) et le dégagement de l'embouchure (26) et, après avoir été refermé, l'outil de sortie (5) est ramené dans sa position de départ dans le poste de prémoulage (11),
dans lequel un dispositif d'alimentation (27) est prévu pour un fluide de refroidissement, en particulier de l'air de refroidissement,
dans lequel une sortie (43) du dispositif d'alimentation (27) coopère avec une entrée (44) d'un dispositif de distribution (45, 46) pour chaque fixation d'outil de sortie (8, 9),
et dans lequel du fluide de refroidissement peut être amené en contact avec le demi-outil de sortie (6, 7) correspondant et éventuellement avec un secteur de col (68) de la paraison (24) maintenue par le moule de sortie (2 ; 3) en passant par au moins une sortie d'extrémité (56, 59) de chaque dispositif de distribution (45, 46),
caractérisé en ce que chaque fixation d'outil de sortie (8, 9) est associée à un dispositif d'alimentation (27) stationnaire,
en ce que chaque dispositif de distribution (45, 46) est divisé en une partie stationnaire (47) disposée dans le poste de prémoulage (11) et une partie (48) mobile solidairement de la fixation d'outil de sortie (8, 9) correspondante,
et en ce que dans la position de départ de chaque moule de sortie (2 ; 3), une entrée (49) de chaque partie mobile solidairement (48) du dispositif de distribution (45, 46) fait face à une sortie (50) de la partie stationnaire (47) correspondante du dispositif de distribution (45, 46).

2. Dispositif selon la revendication 1, caractérisé en ce que chaque partie mobile solidairement (48) du dispositif de distribution (45, 46) s'étend dans le sens radial vers l'extérieur à partir de sa fixation d'outil de sortie (8, 9).

3. Dispositif selon la revendication 1 ou 2, caractérisé en ce que dans la conception de chaque moule de sortie (2 ; 3) une surface de séparation (cf. 52) entre chaque partie mobile solidairement (48) du dispositif de distribution (45, 46) et la partie stationnaire (47) correspondante du dispositif de distribution (45, 46) est inclinée par rapport à la verticale.

4. Dispositif selon l'une ou l'ensemble des revendications 1 à 3, caractérisé en ce que dans la position de départ de chaque moule de sortie (2 ; 3), il existe une garniture de fente (52) entre chaque partie stationnaire (47) du dispositif de distribution (45, 46) et la partie mobile solidairement (48) correspondante du dispositif de distribution (45, 46).

5. Dispositif selon l'une ou l'ensemble des revendications 1 à 4, caractérisé en ce qu'au moins une sortie d'extrémité (56) de la partie mobile solidairement (48) du dispositif de distribution (45, 46) fait face à un premier secteur de circonférence (57) des demi-outils de sortie (6, 7), et en ce qu'au moins une sortie d'extrémité (59) de la partie stationnaire (47) du dispositif de distribution (45, 46) fait face à un autre secteur de circonférence (58) des demi-outils de sortie (6, 7).

6. Dispositif selon l'une ou l'ensemble des revendications 1 à 5, caractérisé en ce qu'une soupape (31) est disposée dans chaque dispositif d'alimentation (27).

7. Dispositif selon l'une ou l'ensemble des revendications 1 à 6, caractérisé en ce que la sortie d'extrémité (56, 59), au nombre d'une au moins, de chaque dispositif de distribution (45, 46) se trouve à distance du demi-outil de sortie (6, 7) correspondant.

8. Dispositif selon la revendication 7, caractérisé en ce que la sortie d'extrémité (56, 59), au nombre d'une au moins, de chaque dispositif de distribution (45, 46) présente des ouvertures de buse (54, 64) orientées vers les demi-outils de sortie (6, 7).

9. Dispositif selon l'une ou l'ensemble des revendications 1 à 6, caractérisé en ce que des ouvertures d'entrée pour des canaux de refroidissement (72) dans les demi-outils de sortie (6, 7) se raccordent à la sortie d'extrémité (56, 59), au nombre d'une au moins, de chaque dispositif de distribution (45, 46).

10. Dispositif selon l'une ou l'ensemble des revendications 1 à 9, caractérisé en ce que chaque partie stationnaire (47) du dispositif de distribution (45, 46) peut être ajustée dans la direction de l'axe longitudinal d'au moins un moule de sortie (2 ; 3).
